# EUROPEAN PATENT SPECIFICATION

(11) **EP 2 278 552 B1**
(45) Date of publication and mention of the grant of the patent: **06.03.2019**
(21) Application number: 09742729.8
(22) Date of filing: 01.05.2009
(51) Int. Cl.: A63F 13/332, A63F 13/497

(54) **VIRTUAL SPACE PROVISION DEVICE, PROGRAM, AND VIRTUAL SPACE PROVISION SYSTEM**
VORRICHTUNG, PROGRAMM UND SYSTEM ZUR BEREITSTELLUNG EINES VIRTUELLEN RAUMS
DISPOSITIF DE FOURNITURE D'ESPACE VIRTUEL, PROGRAMME, ET SYSTÈME DE FOURNITURE D'ESPACE VIRTUEL

(30) Priority: 08.05.2008 JP 2008122090
(43) Date of publication of application: 26.01.2011
(73) Proprietor: NTT DOCOMO, INC., Chiyoda-ku Tokyo 100-6150 (JP)
(72) Inventor: ONDA, Yasushi, Tokyo 100-6150 (JP); KANO, Izua, Tokyo 100-6150 (JP); KAMIYA, Dai, Tokyo 100-6150 (JP); MURAKAMI, Keiichi, Tokyo 100-6150 (JP); YAMADA, Eiju, Tokyo 100-6150 (JP); YAMADA, Kazuhiro, Tokyo 100-6150 (JP)
(74) Representative: Hoffmann Eitle
(86) International application number: PCT/JP2009/058569
(87) International publication number: WO 2009/136605

(56) References cited:
- EP-A1- 1 726 344
- WO-A1-03/050722
- JP-A- 11 184 790
- JP-A- 2001 084 209
- JP-A- 2004 272 579
- US-A1- 2006 148 571

## Description

### Technical Field

The present invention relates to a technology for controlling a behavior of a character that functions to represent a user in a virtual space created by a computer.

### Background Art

Increasingly attracting attention as new communications services are real-time activity services, where a large-scale virtual space created by a computer using three dimensional graphics is shared by multiple users each represented by a character. In contrast to conventional communications conducted over a network by use of text only, such communications using characters allow for a broader range of expression conveyed by a countenance and behavior of each character. For example, in a character information transmission/reception device disclosed in JP-A-2005-100053, contents viewed by and/or listened to by respective characters in a virtual space and contents of utterances made by respective characters are collected, and the collected data is converted into marketing support information. In a shared virtual space-providing device disclosed in JP-A-11-120375, an image of each character in a virtual space is caused to change dynamically depending on circumstance of the character.

### Disclosure of Invention

### Problems to be Solved by the Invention

Attempts have recently been made to provide new services, in which are represented landscapes and arrangements of buildings in a virtual space such that they resemble those in a real space, to give an impression that the characters of respective users are acting in the real space. In using such a service, a user operates a mobile telephone and the user's character enters a virtual space, at which time the user's position in real space is monitored by a position-detecting function of the user's mobile telephone, which is one of the basic functions of the mobile telephone, and that position is reflected in a position of the user's character in the virtual space. In this way, users in the same location in the real space are able to communicate with one another in the virtual space.

By use of such a service, it is made possible for a user to communicate with another user who is at the same location at the same time. However, this communication is limited to that which takes place between real-time users, that is, users who actually are in the location at the same time, and it is not possible for a user to browse contents of communications that took place in the virtual space between other users who were at the location previously.

The present invention is made in view of the background above, and an object of the present invention is to allow a user to browse contents of communications made in a virtual space between other users who were previously at the location at which the user is currently.

WO 03/050722 A1 refers to a recording system for recording motion and acts of avatars and objects around an avatar so as to allow recorded data to be subsequently played back. An avatar of a user is enabled to move in a virtual space, while a server manages the ID, IP address, avatar shape, etc. of the avatar. When a user finds a scene desired to be recorded during the wandering of his avatar in the virtual space, a recording button on a toolbar can be pressed. Upon the recording start command the recording process is started subsequent actions by the avatar, his movements and communications are stored and can be reproduced at a later point in time.

US 2006/148571 A refers to a computer game saving scheme including recording history data for play back upon restart of the game. In the computer game a game state is saved and a history of the preceding game play is recorded. Upon resumption of the game the history of the previous game play is presented to the user without options for modification. EP 1 726 344 A1 refers to a musical game. A database stored in a host server of a game server system contains a mobile telephone terminal ID, a player ID, card ID, and personal information which are correlated to each other. The card ID is identical to the card ID recorded on a card owned by the player. The course data included in the personal information specifies the sequence of the music compositions and the names of the music compositions to be played in the game device communicating with the game server system. When the player executes an application on the mobile information terminal to specify the card ID and generate course data, the course data generated is registered as the mobile telephone terminal ID of the mobile information terminal and the personal information corresponding to the card ID in the database. When the player inserts his/her card into a game device, the game device accesses the host server and transmits the course data corresponding to the card ID to the game device.

### Means of Solving the Problems

To address the above problem, the present invention provides a device for providing communication in a virtual space according to appended claim 1, a program according to appended claim 3, and a system for providing communication in a virtual space according to appended claim 4.

### Effects of the Invention

According to the present invention, a user can browse contents of communications made in a virtual space between other users who were at the location at which the user is currently.

### Brief Description of the Drawings

FIG. 1 is a diagram showing an overall configuration of a virtual space-providing system.
FIG. 2 is a physical configuration diagram of a mobile terminal.
FIG. 3 is a diagram showing an example of a functional configuration of a mobile terminal.
FIG. 4 is a schematic hardware configuration diagram of a virtual space-providing server device.
FIG. 5 is a diagram showing an example of a functional configuration of a virtual space-providing server device.
FIG. 6 is a conceptual diagram of global virtual space control data.
FIG. 7 is a flowchart of a virtual space real-time activity process (first half).
FIG. 8 is a flowchart of a virtual space real-time activity process (second half).
FIG. 9 is a diagram showing an example of a determined field of view.
FIG. 10 is a diagram showing an example of a three-dimensional image.
FIG. 11 is a diagram showing an example of a three-dimensional image.
FIG. 12 is a flowchart of a history replay/modification process (first half).
FIG. 13 is a flowchart of a history replay/modification process (second half).

### Description of Reference Symbols

10: mobile terminal; 11: control unit; 12: transmission/reception unit; 13: instruction input unit; 14: liquid crystal display unit; 15: position detection unit; 16: direction detection unit; 20: mobile packet communications network; 30: virtual space-providing server device; 31: control unit; 32: communications interface; 33: hard disk; 40: Internet communications network; 50: gateway server device; 111: CPU; 112: RAM; 113: EEPROM; 114: ROM; 311: CPU; 312: RAM; 313: ROM

### Best Mode for Carrying out the Invention

In a best mode for carrying out the present invention described in the following, a three-dimensional virtual space that resembles a real space in which users of mobile terminals are physically located is created electronically by a server device, and each user can control behavior of a character that represents the user in the virtual space by operating a mobile terminal. In the following description, such a character will be referred to as an avatar.

### (1) Configuration

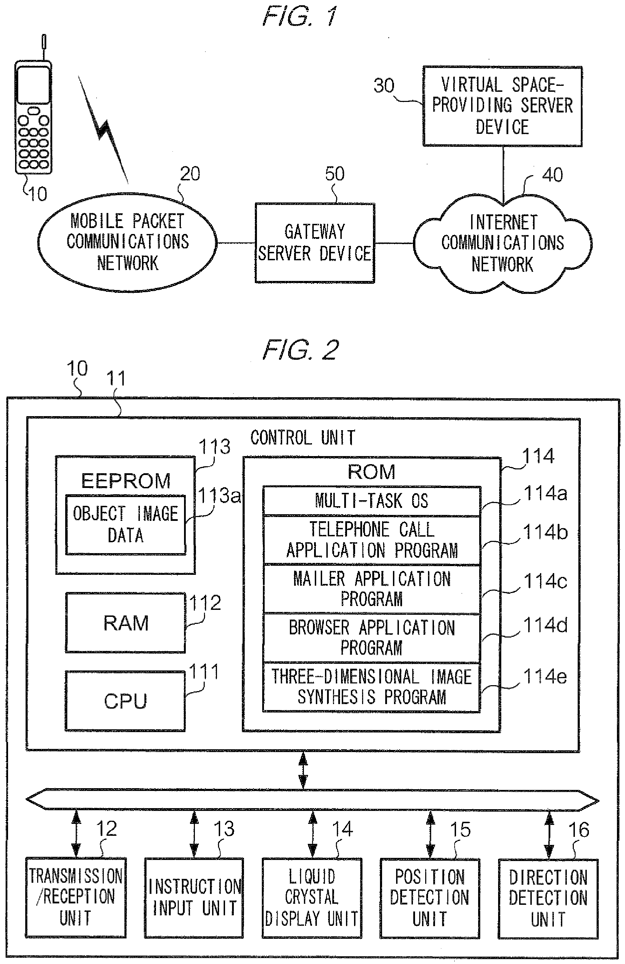

FIG. 1 is a diagram showing an overall configuration of a virtual space-providing system according to an exemplary embodiment of the present invention.

As shown in FIG. 1, this system is configured by inclusion of mobile terminal 10, such as a mobile telephone, a PDA (Personal Digital Assistant), a mobile computer, and the like; mobile packet communications network 20 to which mobile terminal 10 is connected; virtual space-providing server device 30 that provides a virtual space to a user of mobile terminal 10; Internet communications network 40 to which virtual space-providing server device 30 is connected; and gateway server device 50 provided between the two communications networks 20 and 40. Mobile packet communications network 20 is a group of nodes that transfer data following a procedure in accordance with a protocol implemented as simplified TCP (Transmission Control Protocol)/IP (Internet Protocol), or in accordance with a protocol corresponding to HTTP (Hyper Text Transfer Protocol), which is implemented over the TCP/IP, and includes a base station, a packet subscriber processing device, and others. On the other hand, Internet communications network 40 is a group of nodes that transfer data following a procedure in accordance with TCP/IP, or in accordance with HTTP, SMTP (Simple Mail Transfer Protocol) or the like, which is implemented over the TCP/IP, and includes various types of server devices and routers. Gateway server device 50 is a computer that connects mobile packet communications network 20 and Internet communications network 40 to each other, and relays data communicated between these communications networks 20 and 40. Data sent from a node of one of the communications networks to a node of the other of the communications networks are subject to protocol conversion in gateway server device 50 before being transferred to the node of the other one of the communications networks.

Mobile terminal 10 has control unit 11, transmission/reception unit 12, instruction input unit 13, liquid crystal display unit 14, position detection unit 15, and direction detection unit 16. Transmission/reception unit 12 is communication means that performs communication to and from virtual space-providing server device 30 via mobile packet communications network 20 under control of control unit 11. Instruction input unit 13 is an input means that is equipped with buttons of a variety of types, such as multi-function buttons for causing a cursor displayed on liquid crystal display unit 14 to move in upward, downward, left, and right directions, or push buttons for input of numbers, letters, or the like, which when operated by a user provides to control unit 11 an operation signal corresponding to an operation input. Liquid crystal display unit 14 is a display means constituted of a display device such as a liquid crystal panel, and displays a variety of information under control of control unit 11. Position detection unit 15 is a position detection means that detects a coordinate (latitude and longitude) of a position of mobile terminal 10 in a real space, and provides the detected coordinate to control unit 11. Detection of a coordinate may be performed based on a GPS (Global Positioning System), or based on a known position of a base station with a service area within which mobile terminal 10 is present. Direction detection unit 16 is a direction detection means that detects a direction (horizontal direction and vertical direction) of mobile terminal 10 in the real space, and provides direction data indicating the detected direction to control unit 11. Detection of a horizontal direction may be carried out by using a magnet or an acceleration sensor such as a gyro sensor, and detection of a vertical direction may be carried out by using an acceleration sensor such as a gyro sensor.

Control unit 11 includes CPU 111, RAM 112, EEPROM 113, and ROM 114. CPU 111 is control means that uses RAM 112 as a work area to execute a variety of programs stored in ROM 114 and EEPROM 113, to control various parts of mobile terminal 10. EEPROM 113 is a memory means that stores object image data 113a. Object image data 113a is data representing images of avatars acting in a virtual space as representations of users including the user of the mobile terminal and representing images of objects, such as buildings, houses, trees, and so on, for creating virtual space scenery. Object image data 113a can be downloaded from virtual space-providing server device 30. ROM 114 stores preinstalled programs. Preinstalled programs are programs that are stored in ROM 114 during a manufacture of mobile terminal 10, and such preinstalled programs include multi-task operating system (hereinafter, "multi-task OS") 114a, telephone call application program 114b, mailer application program 114c, browser application program 114d, and three-dimensional image synthesis program 114e.

Explanation will now be given of these preinstalled programs.

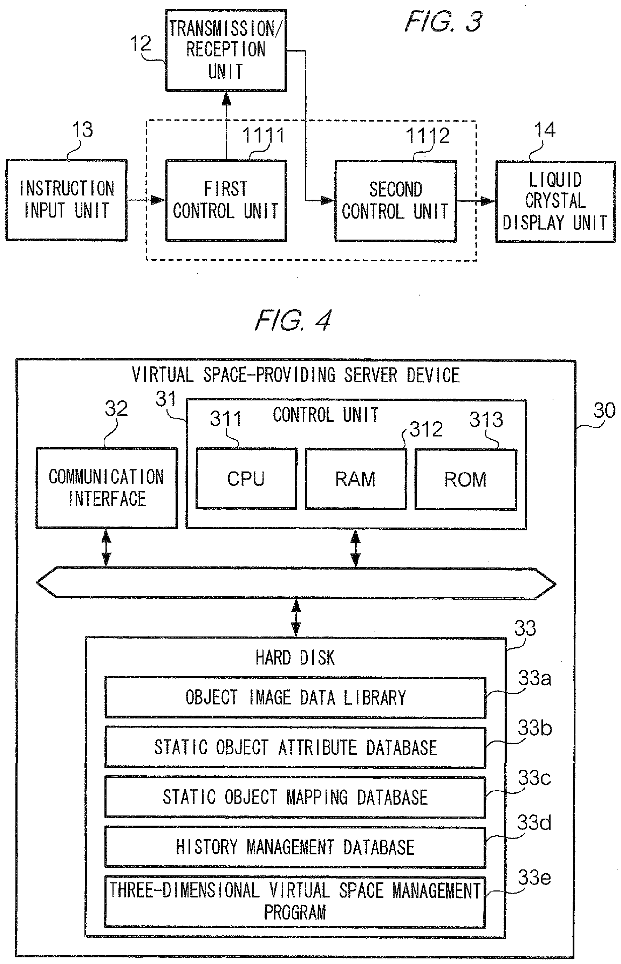

Multi-task OS is an operating system that supports various functions, such as virtual memory space allocation, necessary for achieving pseudo-parallel execution of plural tasks on the basis of TSS (Time-Sharing System). Telephone call application program 114b provides such functions as call reception, call placement, and transmission/reception of voice signals to and from mobile packet communications network 20. Mailer application program 114c provides such functions as editing and transmission/reception of electronic mail. Browser application program 114d provides such functions as reception and interpretation of data written in HTML (Hyper Text Markup Language). Three-dimensional image synthesis program 114e is a program activated together with browser application program 114d, to extract local virtual space control data embedded in the HTML data received by browser application program 114d, and to obtain a three-dimensional image by arranging items of object image data 113a in EEPROM 113 according to the local virtual space control data, so that the obtained three-dimensional image is displayed on liquid crystal display unit 14. The local virtual space control data will be explained in detail later. FIG. 3 is a diagram showing an example of a functional configuration of mobile terminal 10. In this drawing, first control unit 111 and second control unit 112 are implemented by CPU 111 executing a computer program stored in ROM 114.

FIG. 4 is a diagram showing a schematic hardware configuration of virtual space-providing server device 30.

Virtual space-providing server device 30 is equipped with control unit 31, communication interface 32, and hard disk 33. Control unit 31 includes CPU 311, RAM 312, ROM 313, and others. CPU 311 is a control means that uses RAM 312 as a work area to execute a variety of programs stored in ROM 313 and hard disk 33, so as to control various parts of virtual space-providing server device 30. Communication interface 32 is a communication means that controls communication of data according to a protocol such as TCP/IP or HTTP, and performs communication to and from mobile terminal 10 via mobile packet communications network 20. Hard disk 33 is a storing means having a large capacity, and stores object image data library 33a, static object attribute database 33b, static object mapping database 33c, history management database 33d, and three-dimensional virtual space management program 33e.

In the following, contents of data stored in hard disk 33 will be explained in detail.

In object image data library 33a, each item of object image data 113a created by an administrator or the like of virtual space-providing server device 30 is associated with an object identifier that identifies each item of object image data 113a. The objects stored in this library as items of object image data 113a generally can each be classified as belonging to a group of static objects such as buildings, houses, trees, and the like, which are fixed at specific coordinates in a three-dimensional virtual space to represent scenes in the virtual space, or a group of dynamic objects that symbolize appearances of avatars in a variety of ways, where the avatars are subject to selection by respective users and can be controlled to act in the virtual space. Items of object image data 113a of static objects can be updated in accordance with changes in scenes in the real space, which may result from construction of a new building or the like. Dynamic objects with new designs are to be added regularly, to prevent allocation to many users of an identical avatar. Items of object image data 113a added to the library are downloadable to multiple mobile terminals 10.

In static object attribute database 33b, an object identifier indicating each static object is associated with appearance attribute data representing a color, shape, and size of the static object. In static object mapping database 33c, an object identifier of each static object placed in a three-dimensional virtual space is associated with coordinate data representing a coordinate of a position of the static object. As described at the beginning of the specification, a three-dimensional virtual space provided by the present system is constituted to represent a real space, and therefore, the coordinate of the position of each static object in the virtual space is set to correspond with that of the corresponding object in the real space.

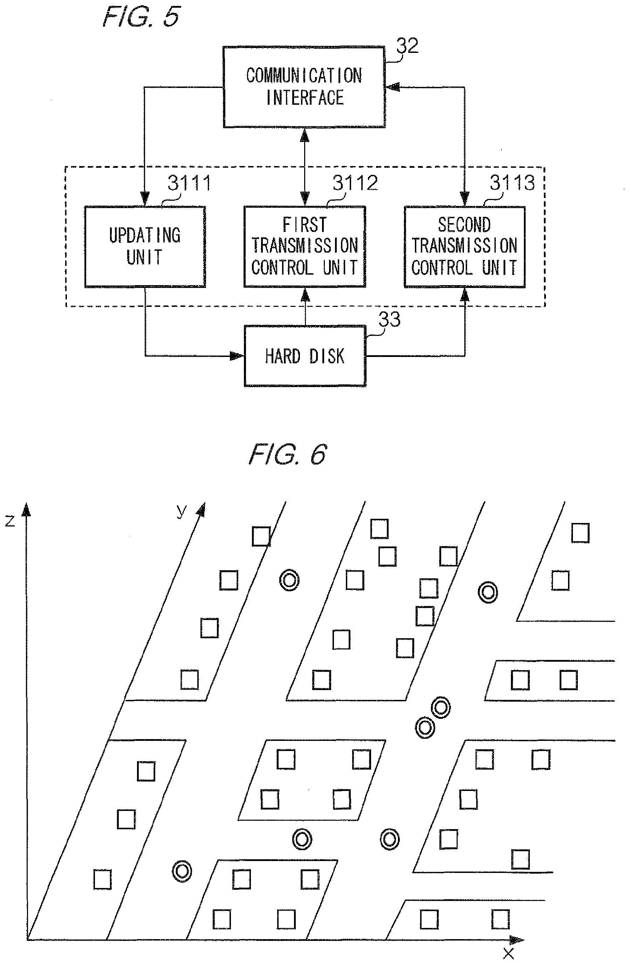

Control unit 31 arranges in a three-dimensional coordinate system the object identifiers of static objects contained in static object attribute database 33b and static object mapping database 33c and the object identifiers of dynamic objects corresponding to avatars of mobile terminals 10 that are logged in to a virtual space provided by virtual space-providing server device 30, and creates in RAM 312 global virtual space control data that represents positional relationships between the arranged object identifiers. In history management database 33d, update contents of the global virtual space control data are associated with their update times. It is to be noted that a description "mobile terminal 10 has logged in to a virtual space" indicates a condition where virtual space-providing server device 30 can provide the user of mobile terminal 10 with services relating to the virtual space. Also, the term "global" is used in this exemplary embodiment to refer to data that can be shared by each mobile terminal 10. On the other hand, a term "local" is used to refer to data for use in individual mobile terminal 10. FIG. 5 is a diagram showing an example of a functional configuration of virtual space-providing server device 30. In this drawing, updating unit 3111, first transmission control unit 3112, and second transmission control unit 3113 are implemented by CPU 311 that reads and executes a computer program stored in ROM 313 or hard disk 33.

FIG. 6 is a conceptual diagram of the global virtual space control data.

As shown in FIG. 6, this global virtual space control data constitutes a three-dimensional coordinate system with length (x), width (y), and height (z). It is assumed here that the x-axis extends in an east/west direction in the real space, the y-axis a north/south direction, and the z-axis a vertical direction (a direction of gravity). The space represented by the coordinate system shown in FIG. 6 corresponds to a communication-enabled area of mobile packet communications network 20 in which the services are available in the real space. On a plane having a height (z) substantially equal to zero there are arranged object identifiers of static objects such as buildings and houses (each shown by a mark "□" in the drawing). An object identifier of a dynamic object corresponding to each avatar (shown by a mark "⊚" in the drawing) is placed on a plane having a height (z) substantially equal to zero when the avatar is on the ground, but when the avatar is on an upper floor of a static object such as a building, the object identifier is placed at a position in accordance with the height of the floor. Control unit 31 causes a coordinate of an object identifier " ⊚" of each dynamic object to move in accordance with an operation of mobile terminal 10, and associates a character string representing a content of an utterance of an avatar with a coordinate where the utterance was made. Further, three-dimensional data including an arrangement of static objects, dynamic objects (other avatars), and character strings representing contents of utterances, that are to be within a field of view of an avatar, is sent from control unit 31 to mobile terminal 10, and is displayed on liquid crystal display unit 14.

### (2) Operation

Next, explanation will be given of an operation of this exemplary embodiment.

Virtual space-providing server device 30 provides two types of services: a real-time activity service and a history replay/modification service. When a user who has logged in to a virtual space of virtual space-providing server device 30 from mobile terminal 10 selects use of the former service, a virtual space real-time activity process is executed, and when the user selects use of the latter service, a history replay/modification process is executed. Thus, an operation in this exemplary embodiment is classified generally into the virtual space real-time service process and the history replay/modification process. It is to be noted that a user who wishes to use the services must complete a registration procedure set forth by an entity that operates virtual space-providing server device 30. In the registration procedure, a user selects a specific avatar that represents the user in a virtual space, whereby an object identifier of the avatar and object image data 113a in object image data library 33a are obtained from virtual space-providing server device 30 and are stored in EEPROM 113 of mobile terminal 10.

### (2-1) Real-time Activity Service

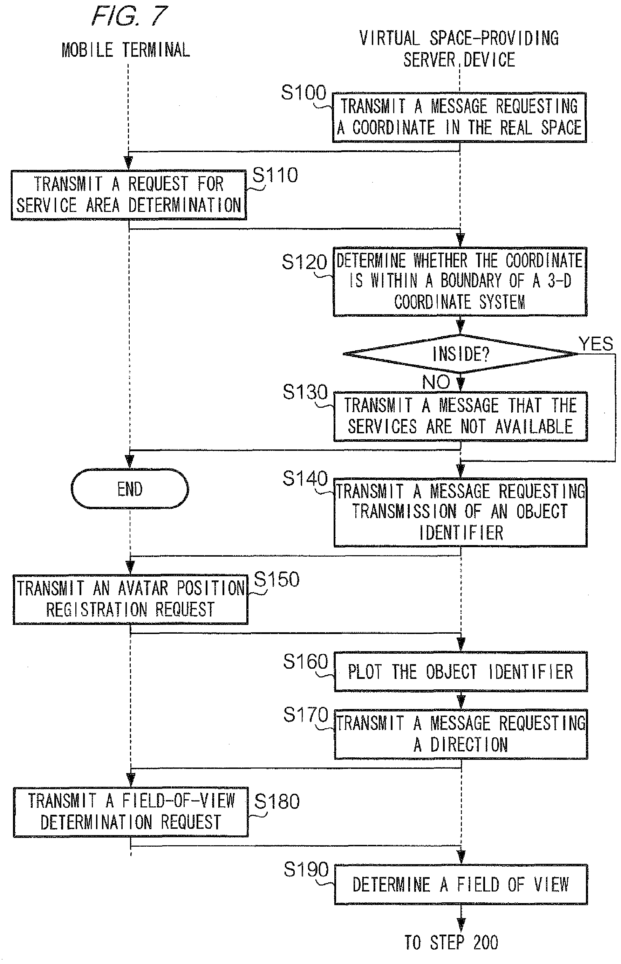

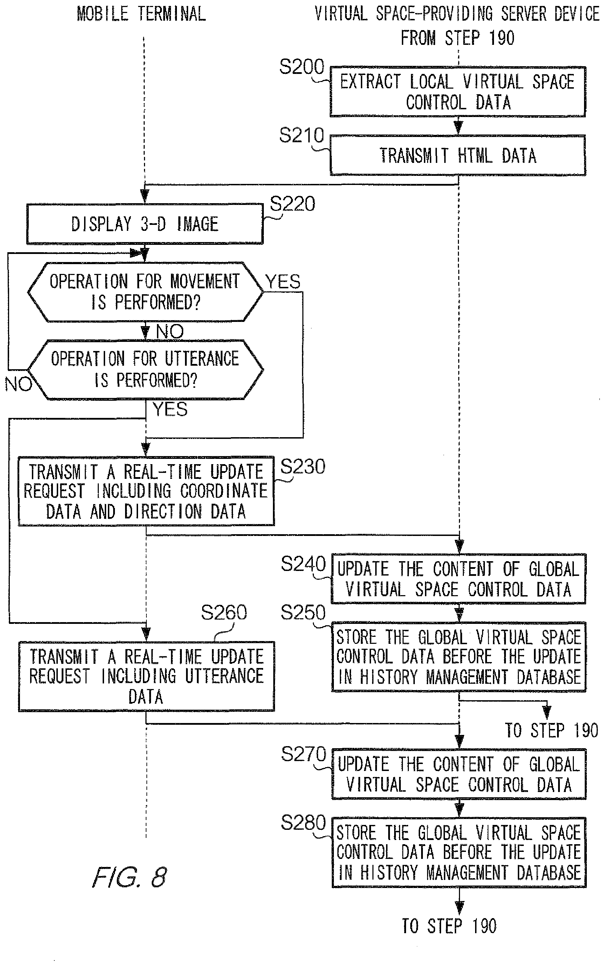

FIGS. 7 and 8 are sequence charts showing a virtual space real-time activity process.

In FIG. 7, when a user operates instruction input unit 13 of mobile terminal 10 to access virtual space-providing server device 30, and performs a predetermined operation such as entering of a password, mobile terminal 10 logs in to a virtual space provided to virtual space-providing server device 30. Subsequently, when the user operates instruction input unit 13 of mobile terminal 10 to select use of the real-time activity service, control unit 31 of virtual space-providing server device 30 transmits a message requiring transmission of coordinate data in the real space to mobile terminal 10 (S100). Upon receipt of this message, mobile terminal 10 transmits to virtual space-providing server device 30 a service area determination request that includes coordinate data provided from position detection unit 15 (S110).

Upon receipt of the service area determination request, control unit 31 of virtual space-providing server device 30 determines whether the coordinate indicated by coordinate data included in the request is within a boundary of the three-dimensional coordinate system of the global virtual space control data created in RAM 312 (S120). In step S120, If it is determined in step S120 that the coordinate is outside the boundary of the three-dimensional coordinate system, control unit 31 transmits to mobile terminal 10 a message that the services are not available (S130). When mobile terminal 10 receives this message, the process is terminated. In this case, the user may move to an area where mobile terminal 10 can receive the real-time activity service, and then may again log in to a virtual space of virtual space-providing server device 30.

If it is determined in step S120 that the coordinate is within the boundary of the three-dimensional coordinate system, control unit 31 transmits to mobile terminal 10 a message requesting transmission of an object identifier for identifying an avatar (S140). Upon receipt of this message, control unit 11 of mobile terminal 10 reads out the object identifier of the avatar of the user stored in EEPROM 113, and transmits to virtual space-providing server device 30 an avatar position registration request that includes the object identifier (S150). Control unit 31 of virtual space-providing server device 30 determines, in the three-dimensional coordinate system of the global virtual space control data, a coordinate indicated by the coordinate data of the object identifier included in the service area determination request, which was received from mobile terminal 10, and plots the object identifier included in the avatar position registration request at the determined coordinate (S160). That is, control unit 31 stores the determined coordinate and the object identifier included in the avatar position registration request in RAM 312 such that they are associated with each other.

Then, after plotting the object identifier, control unit 31 transmits to mobile terminal 10 a message requesting transmission of direction data for determining a field of view of the avatar (S170). Upon receipt of this message, control unit 11 of mobile terminal 10 transmits to virtual space-providing server device 30 a field-of-view determination request that includes direction data indicating a direction signal provided from direction detection unit 16 (S180). Upon receipt of this field-of-view determination request, control unit 31 of virtual space-providing server device 30 determines a field of view facing in the direction indicated by the direction data included in the field-of-view determination request, based on the coordinate plotted in step S160 in the three-dimensional coordinate system of the global virtual space control data (S190).

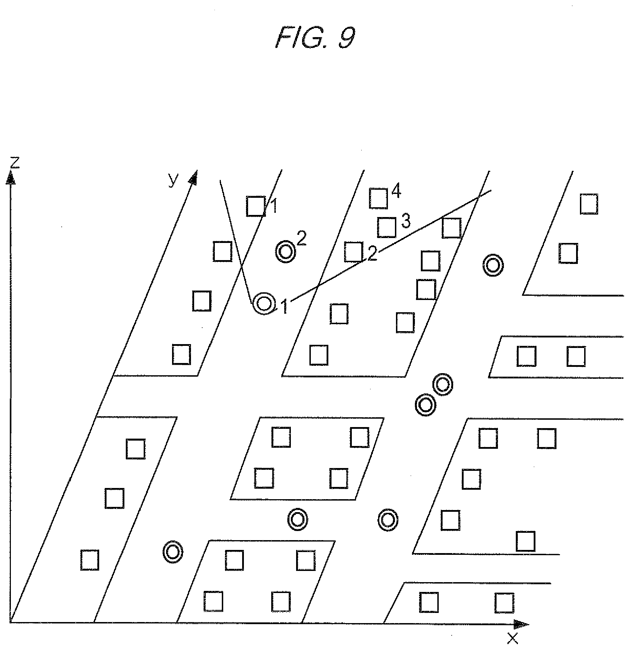

FIG. 9 is a diagram showing an example of a field of view determined in step S190. In the example shown in FIG. 9, the field of view spreads from a coordinate denoted by "⊚1" in a direction in which a value of y in the y-axis direction increases (north in the real space). After determination of a field of view, control unit 31 extracts local virtual space control data from the global virtual space control data, where the local virtual space control data includes object identifiers of static and dynamic objects that appear in the determined field of view, coordinates of these objects, and the coordinate plotted in step S160 (S200).

Now, with the determined field of view shown in FIG. 9 taken as an example, a concrete explanation of step S200 will be given.

In the example shown in FIG. 9, a field of view spreads in the north from the avatar position indicated by "⊚1," and within the field of view there are a dynamic object (avatar) denoted by "⊚2" and static objects denoted by "□1," " □2," "□3," and "□4". Of these four static objects, "□3" is positioned behind "□2" as viewed from "⊚1," and thus, depending on a size and/or a shape, "□ 3" cannot be seen from "⊚1." Therefore, in step S200, a culling process is conducted in which, based on appearance attribute data stored in static object attribute database 33 in association with the object identifier of each of the static objects "□1," "□2," "□3," and "□4," a shape and the like of each of "□1," " □2," "□3," and "□4," are determined, and then, based on the determined shape and the like as well as on positional relationships of "□1," "□2," "□3," and " □4" relative to "⊚1," a static object(s) that is determined not to be visible from "⊚1" is removed. Subsequently, the object identifiers of the static objects and the dynamic objects (avatars) that remain after the culling process and the coordinate data indicating their coordinates are extracted as the local virtual space control data.

In FIG. 8, after the extraction of the local virtual space control data, control unit 31 transmits to mobile terminal 10 HTML data in which the extracted local virtual space control data is embedded (S210). Upon receipt of the HTML data, control unit 11 of mobile terminal 10 causes liquid crystal display unit 14 to display a three-dimensional image formed in accordance with the local virtual space control data embedded in the HTML data (S220). Specifically, control unit 11 reads out from EEPROM 113 items of object image data 113a associated with respective object identifiers contained in the local virtual space control data, expands or reduces a size of each item of object image data 113a depending on a positional relationship between the coordinate associated with each object identifier and the coordinate of the mobile terminal itself, and lays out the images represented by the expanded/reduced items of object image data 113a.

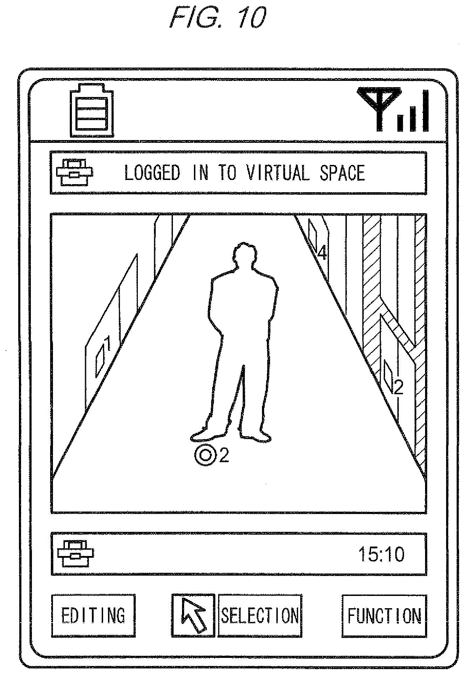

FIG. 10 is a three-dimensional image displayed on liquid crystal display unit 14, which is created based on the local virtual space control data extracted in relation to the field of view shown in FIG. 9. In the example shown in this drawing, a dynamic object of an avatar of another user corresponding to an object identifier of "⊚2" is displayed directly in front of the field of view, a static object of a building that corresponds to an object identifier of "□1" is displayed on a left side of the road, and static objects of buildings that respectively correspond to object identifiers of "□2" and "□4" are displayed on a right side of the road. It is to be noted that a static object corresponding to an object identifier of "□3" has been removed by the culling process in step S200, and thus is not shown in this screen image.

When this three dimensional image is displayed on liquid crystal display unit 14, a user can perform two types of operations: a movement operation of an avatar, and an utterance operation.

The movement operation is performed corresponding to an actual movement of a user carrying mobile terminal 10 in the real space. In the virtual space real-time activity process, an avatar in the virtual space is caused to move in relation to the position of mobile terminal 10 in the real space. Therefore, to cause the avatar in the virtual space to move straight forward, the user should move straight forward while carrying mobile terminal 10, and to cause the avatar to move backward, the user should move backward. On the other hand, an utterance operation is performed by a user inputting character strings representing a content of an utterance that the user wishes to deliver to other users present within the field of view, one character at a time, via the push buttons of instruction input unit 13.

When a movement operation is performed, control unit 11 transmits to virtual space-providing server device 30 an update request that includes the associated object identifier, which is stored in EEPROM 113, a coordinate provided from position detection unit 15, and direction data provided from direction detection unit 16 (S230). Upon receipt of the update request, control unit 31 of virtual space-providing server device 30 updates the content of the global virtual space control data in accordance with the update request (S240). Specifically, the coordinate of the object identifier included in the update request, i.e., the coordinate of the object identifier plotted in step S160, is caused to move to a new coordinate indicated by the coordinate data included in the update request.

Then, control unit 31 stores the global virtual space control data before the update in history management database 33d in association with the date and time data representing an update time thereof (S250). Thereafter, steps S190 to S220 are executed based on the coordinate data and the direction data included in the update request. As a result, the three-dimensional image displayed on liquid crystal display unit 14 of mobile terminal 10 that transmitted the update request is updated to display new content that includes a dynamic object(s) (avatar(s)) and a static object(s) present in a field of view defined for the coordinate after the movement.

On the other hand, when an utterance operation is performed, control unit 11 transmits to virtual space-providing server device 30 an update request that includes the associated object identifier, which is stored in EEPROM 113, and utterance data representing a character string input via the push buttons (S260). Upon receipt of the update request, control unit 31 of virtual space-providing server device 30 updates the content of the global virtual space control data in accordance with the update request (S270). Specifically, the utterance data included in the update request is stored in RAM 312 in association with the coordinate of the object identifier included in the update request, i.e., the coordinate of the object identifier plotted in step S160. Thus, the global virtual space control data on RAM 312 is updated, and control unit 31 stores the global virtual space control data before the update in history management database 33d in association with date and time data representing an update time thereof (S280). Thereafter, steps S190 to S220 are executed based on the coordinate data and the direction data included in the update request.

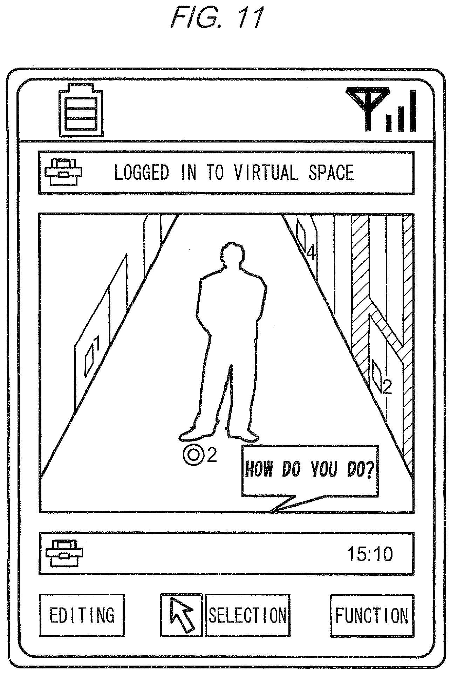

The utterance data that is associated with the object identifier in step S270 is action data representing an action of an avatar, and is treated as a part of the local virtual space control data. The association between the object identifier and the utterance data is maintained until mobile terminal 10 that transmitted the update request including the utterance data transmits a new update request. As a result of the foregoing, the three-dimensional image displayed on liquid crystal display unit 14 of mobile terminal 10 that transmitted the real-time update requests is updated to include a dynamic object(s) (avatar(s)) and a static object(s) present in the field of view in addition to its own user's utterance ("How do you do?"), as shown in FIG. 11. This three-dimensional image is maintained until a new request is transmitted from mobile terminal 10.

### (2-2) History Replay/Modification Service

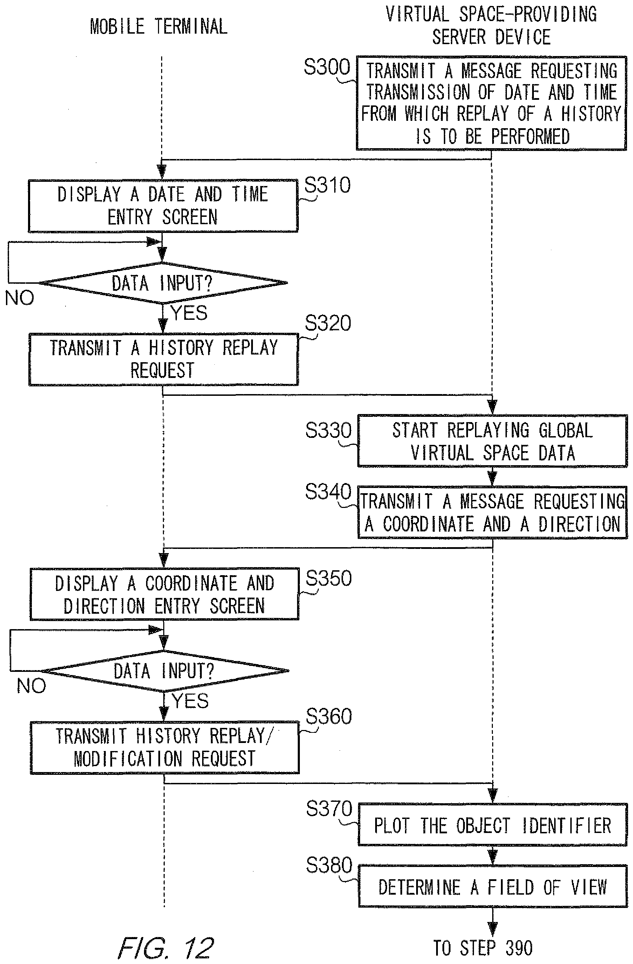

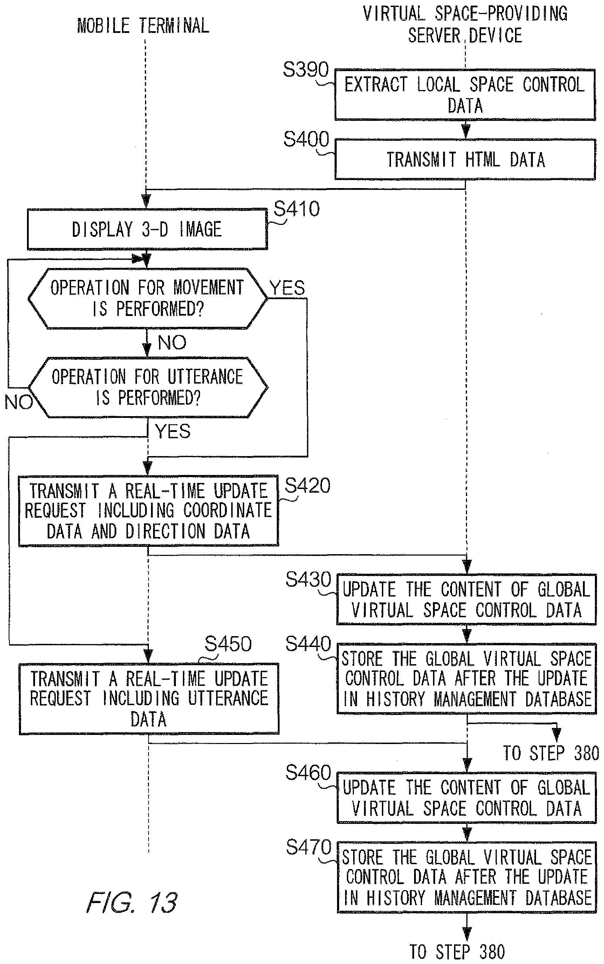

FIGS. 12 and 13 are each a flowchart showing a history replay/modification process. When a user selects use of a history replay/modification service in a state where mobile terminal 10 is logged in to a virtual space of virtual space-providing server device 30, control unit 31 transmits to mobile terminal 10 a message requesting transmission of date and time data of a replay start point from which a replay of a history is to be performed (S300). Upon receipt of the message, control unit 11 of mobile terminal 10 causes liquid crystal display unit 14 to display a date and time entry screen (S310). On this screen, a character string that means "specify from when a state of the three-dimensional virtual space should be replayed" is displayed, and a field for entry of date and time is displayed below the character string. The user, on viewing the date and time entry screen, operates the push buttons of instruction input unit 13 to enter into the date and time entry field a date and time earlier than the present. Upon completion of data entry into the date and time entry field, control unit 11 transmits to virtual space-providing server device 30 a first history replay request including the date and time data of replay start point that was input into the entry field (S320). To perform a replay of a history of the global virtual space control data, this first history replay request demands determination of a period of time in which the replay of the history is to be conducted.

Upon receipt of the first history replay request, control unit 31 of virtual space-providing server device 30 identifies global virtual space control data that is stored in history management database 33d in association with the date and time data included in the first history replay request, and starts replaying the global virtual space data from the date and time indicated by the date and time data (S330). That is, global virtual space control data stored in history management database 33d in association with an update time that corresponds to the date and time data of the replay start time is read out to RAM 312 time-sequentially, so that activities of an avatar(s) present in the three-dimensional virtual space on or after the date and time indicated by the date and time data included in the first history replay request are reproduced in RAM 312.

Control unit 11 transmits to mobile terminal 10 a message requesting transmission of coordinate data and direction data (S340). Upon receipt of the message, control unit 11 of mobile terminal 10 causes liquid crystal display unit 14 to display a coordinate and direction entry screen (S350). In this screen, a character string that means "enter the coordinate and direction necessary to determine the field of view and the position of your avatar" is displayed, and a field for entry of a coordinate and a field for entry of a direction are shown below the character string. The user, on viewing the coordinate and direction entry screen, operates the dial buttons of instruction input unit 13 to perform data entry into the coordinate entry field and the direction entry field. Upon completion of data entry into each field, control unit 11 transmits to mobile terminal 10 a second history replay request that includes coordinate data indicating the coordinate that was input to the coordinate entry field, direction data that was input to the direction entry field, and the associated object identifier stored in EEPROM 113 (S360). To perform a replay of a history of the virtual space, this second history replay request demands determination of a position in the virtual space with respect to which the replay of the history is to be conducted.

Upon receipt of the second history replay request, control unit 31 of virtual space-providing server device 30 identifies a coordinate indicated by the coordinate data included in the second history replay request from the three-dimensional coordinate system of the global virtual space control data in RAM 312, and plots the object identifier included in the second history replay request at the identified coordinate (S370). Further, control unit 31 determines a field of view that originates from the coordinate at which the object identifier is plotted in step S370 and that faces in a direction indicated by the direction data included in the second history replay request (S380). Then, control unit 11 extracts, as the local virtual space control data, the object identifiers of the static and dynamic objects present in the determined field of view, the coordinates of these objects, and the utterance data, from history management database 33d (S390). The extracted data, with the coordinate at which the plotting is performed in step S380 being included therein, is embedded into HTML data as the local virtual space control data, and the HTML data is transmitted to mobile terminal 10 (S400). The object identifier(s) of the dynamic object(s) extracted in this process are an identifier(s) allocated to an avatar(s) other than the avatar associated with mobile terminal 10.

Upon receipt of the HTML data, control unit 11 of mobile terminal 10 causes liquid crystal display unit 14 to display a three-dimensional image arranged in accordance with the local virtual space control data embedded in the HTML data (S410). As a result of the foregoing, the three-dimensional image displayed on liquid crystal display unit 14 of mobile terminal 10 that transmitted the update request contains a static object(s) present in a field of view determined based on the coordinate and direction specified via the coordinate and direction entry screen, and a dynamic object(s) (avatar(s)) acting in the field of view at a date and time specified via the date and time entry screen.

Once the three-dimensional image is displayed on liquid crystal display unit 14, the user can perform two types of operation (movement operation and utterance operation), as in the case when a three-dimensional image is displayed in the virtual space real-time activity process, though, of the two types of operation, the movement operation is different from that in the virtual space real-time activity process.

The movement operation is not performed by a user's movement of mobile terminal 10 as described in the foregoing, but instead is performed by a user's pressing of any of multi-function buttons corresponding to upward/downward/left/right movements. This is because in the history replay/modification process, an avatar in the virtual space is caused to move irrespective of a position of mobile terminal 10 in the real space. In such a case, to cause the avatar in the virtual space to move straight forward, the user should press an "upward" multifunction button, and to cause the avatar to move backward, the user should press a "downward" multifunction button.

In response to a movement operation, control unit 11 transmits to virtual space-providing server device 30 a history modification request that includes coordinate data indicating the position of the avatar that is caused to move in a direction specified by the operation, direction data, and the associated object identifier, which is stored in EEPROM 113 (S0420). Upon receipt of the history modification request, control unit 31 of virtual space-providing server device 30 modifies the content of the global virtual space control data in RAM 312 in accordance with the history modification request (S430). Specifically, the coordinate of the object identifier included in the history modification request, i.e., the coordinate of the object identifier plotted in step S370, is caused to move to a coordinate indicated by the coordinate data included in the history modification request. Then, control unit 31 stores the modified global virtual space control data in history management database 33d in place of the global virtual space control data before the modification (S440). Thereafter, steps S380 to S410 are executed based on the coordinate data, direction data, and object identifier included in the history update request.

On the other hand, when an operation for utterance is performed, control unit 31 transmits to virtual space-providing server device 30 a history modification request that includes the associated object identifier, which is stored in EEPROM 113, and utterance data representing a character string input via the dial buttons (S450). Upon receipt of the history modification request, control unit 31 of virtual space-providing server device 30 updates the content of the global virtual space control data in accordance with the history modification request (S460). Specifically, the utterance data included in the history modification request is associated with the coordinate of the object identifier plotted in step S370. Then, control unit 31 stores the global virtual space control modified in step S460 in history management database 33d in place of the global virtual space control data before the modification (S470). Thereafter, steps S380 to S410 are executed based on the coordinate data, the direction data, and the object identifier included in the history update request.

As a result of the foregoing, the three-dimensional image displayed on liquid crystal display unit 14 of mobile terminal 10 that transmitted the update request contains a static object(s) present in a field of view determined based on the coordinate and direction specified via the coordinate and direction entry screen, a dynamic object(s) (avatar(s)) acting in the field of view at a date and time specified via the date and time entry screen, and an utterance(s) made by the associated avatar or any other avatar in the field of view. Thus, a user can move freely in the virtual space to see the events that occurred in the past within the virtual space as a result of activities of respective avatars, such as a movement or an utterance of each avatar, a conversation made between avatars, and so on. Further, if an utterance made by an avatar during a time period in real-time is responded to by an utterance made by an avatar after the time period has lapsed, the contents of the later utterance also can be saved as a history. This provides a new concept of communication.

According to the exemplary embodiment described in the foregoing, when a user logs in to a site of virtual space-providing server device 30 via mobile terminal 10 of the user, the user can use two services: a real-time activity service and a history replay/modification service. In the real-time activity service, an avatar is caused to appear at a coordinate in the virtual space that coincides with a coordinate of the user in the real space, and the avatar is caused to move in the virtual space in accordance with a movement of the user. Thus, the user can communicate with another user who is near the user in the real space via exchange of utterances to and from an avatar of the other user in the virtual space. On the other hand, in the history replay/modification service, upon designation of a past date and time by a user, a state of the virtual space at the designated date and time is replayed. If the user causes the avatar of the user to appear in the virtual space being replayed and to make an utterance, the content of the history is modified as if the utterance was actually made in the virtual space at the date and time. Thus, a user is allowed not only to browse a state of the virtual space at a time when the user was not logged in to a site of virtual space-providing server device 30, but also to modify a content of the virtual space as if the avatar of the user was in the virtual space.

### (Other Embodiments)

Various modifications are possible with regard to the present invention.

In the aforementioned exemplary embodiment, utterance data is taken as an example of action data of an avatar, which serves as a character. However, activity data, which represents an activity of a character, may include an action other than an utterance. For example, a change in countenance or posture of a character may serve as action data, or a tone of voice used to make an utterance may serve as action data.

In the aforementioned virtual space real-time activity process, an avatar is caused to move in accordance with a movement of mobile terminal 10 in the real space. However, the movement of an avatar does not have to be related to that of mobile terminal 10, and may be controlled via operations by a user as in the history replay/modification process.

Also, in the aforementioned exemplary embodiment, direction data is generated by detection of a direction of respective avatars. However, in cases where all of the avatars face in the same direction, for example, the detection of direction of an avatar is not indispensible.

In the aforementioned exemplary embodiment, a three-dimensional image displayed on a liquid crystal display unit of a mobile terminal may include a static object(s) and a dynamic object(s) (other avatar(s)) present within a field of view of an avatar, but the avatar of the user of the mobile terminal is not displayed. However, it is possible to display a rear view of the avatar of the user of the mobile terminal in the field of view at a position closest to the viewer.

In the aforementioned exemplary embodiment, a three-dimensional image synthesis program is stored in a RAM of a mobile terminal as a native application. However, the program may be downloaded from a server device on the Internet as a Java (registered trademark) application.

In the aforementioned exemplary embodiment, a three-dimensional image synthesis program is implemented in a mobile terminal, that is, a mobile phone capable of accessing the Internet communications network via a mobile packet communications network. However, similar effects can be obtained in a case in which a similar program is implemented in a personal computer capable of accessing the Internet communications network directly.

## Claims

1. A device for providing communications in a virtual space comprising;
a communication unit (32) that communicates with a communication terminal (10);
a storage unit (33) that stores virtual space control data in association with one or more update times of the virtual space control data, the virtual space control data including an identifier that identifies a character, position data that represents a position of the character in a virtual space, and action data that represents an action of the character;
an updating unit (3111) that, upon receipt of an update request including the identifier, the position data, and the action data from the communication terminal via the communication unit, updates the global virtual space control data stored in the storage unit based on the update request;
a first transmission control unit (3112) that extracts an identifier, position data, and action data of another character that is positioned within a predetermined range with respect to a position represented by the position data included in the update request, from the virtual space control data stored in the storage unit in association with a latest update time, and transmits the extracted information to the communication terminal via the communication unit; **characterized by**
a second transmission control unit (3113) that, upon receipt of a history replay request including the identifier, position data with respect to which the replay of the history is to be conducted, and replay start time of the virtual space control data from the communication terminal via the communication unit, extracts an identifier, position data, and action data of another character that is positioned within a predetermined range with respect to a position represented by the position data included in the history replay request, from the virtual space control data stored in the storage unit in association with the replay start time, and transmits the extracted information to the communication terminal via the communication unit,
wherein, upon receipt of a history modification request including the identifier, the position data, the action data, and replay time of the virtual space control data from the communication terminal via the communication unit, the updating unit updates the virtual space control data stored in the storage unit in association with an update time corresponding to the replay time in accordance with a content included in the history modification request.

2. The device according to Claim 1, wherein the action data is data including a content of an utterance made via the communication terminal.

3. A program for causing a computer to perform steps of:
storing virtual space control data in association with one or more update times of the virtual space control data, the virtual space control data including an identifier that identifies a character, position data that represents a position of the character in a virtual space, and action data that represents an action of the character;
upon receipt of an update request including the identifier, the position data, and the action data from the communication terminal, updating the stored global virtual space control data based on the update request;
extracting an identifier, position data, and action data of another character that is positioned within a predetermined range with respect to a position represented by the position data included in the update request, from the virtual space control data stored in association with a latest update time, and transmitting the extracted information to the communication terminal; **characterized by**
upon receipt of a history replay request including the identifier, position data with respect to which the replay of the history is to be conducted, and replay start time of the virtual space control data from the communication terminal, extracting an identifier, position data, and action data of another character that is positioned within a predetermined range with respect to a position represented by the position data included in the history replay request, from the virtual space control data stored in association with the replay start time, and transmitting the extracted information to the communication terminal, and
upon receipt of a history modification request including the identifier, the position data, the action data, and replay time of the virtual space control data from the communication terminal, updating the virtual space control data with an update time corresponding to the replay time in accordance with a content included in the history modification request.

4. A system for providing communications in a virtual space comprising a server device and a communication terminal,
the server device (30) including:
a first communication unit (32) that communicates with the communication terminal (11);
a storage unit (33) that stores virtual space control data in association with one or more update times of the virtual space control data, the virtual space control data including an identifier that identifies a character, position data that represents a position of the character in a virtual space, and action data that represents an action of the character;
an updating unit (3111) that, upon receipt of an update request including the identifier, the position data, and the action data from the communication terminal via the first communication unit, updates the stored global virtual space control data in the storage unit based on the update request;
a first transmission control unit (3112) that extracts an identifier, position data, and action data of another character that is positioned within a predetermined range with respect to a position represented by the position data included in the update request, from the virtual space control data stored in the storage unit in association with a latest update time, and transmits the extracted information to the communication terminal via the first communication unit; and
a second transmission control unit (3113) that, upon receipt of a history replay request including the identifier, position data with respect to which the replay of the history is to be conducted, and replay start time of the virtual space control data from the communication terminal via the first communication unit, extracts an identifier, position data, and action data of another character that is positioned within a predetermined range with respect to a position represented by the position data included in the history replay request, from the virtual space control data stored in the storage unit in association with the replay start time, and transmits the extracted information to the communication terminal via the first communication unit
wherein, upon receipt of a history modification request including the identifier, the position data, the action data, and replay time of the virtual space control data from the communication terminal via the communication unit, the updating unit updates the virtual space control data stored in the storage unit in association with an update time corresponding to the replay time in accordance with a content included in the history modification request, and
the communication terminal (11) including:
a second communication unit that communicates with the virtual space-providing device;
a display unit (14);
an input unit (13) for inputting an action to be performed by the character in the virtual space;
a first control unit (1111) that transmits an update request including the identifier, the position data, and action data representing an action input via the input unit to the virtual space-providing device via the second communication unit; and
a second control unit (1112) that, when the second communication unit receives virtual space control data transmitted from the first transmission control unit or the second transmission control unit of the virtual space-providing device, causes the display unit to display an image of the virtual space based on the virtual space control data.

## Patentansprüche

1. Vorrichtung zur Bereitstellung von Kommunikation in einem virtuellen Raum, umfassend;
eine Kommunikationseinheit (32), die mit einem Kommunikationsendgerät (10) kommuniziert;
eine Speichereinheit (33), die Steuerdaten eines virtuellen Raumes in Verbindung mit einer oder mehreren Aktualisierungszeiten der Steuerdaten des virtuellen Raumes speichert, wobei die Steuerdaten des virtuellen Raumes einen Identifikator, der einen Charakter identifiziert, Positionsdaten, die eine Position des Charakters in einem virtuellen Raum repräsentieren, und Aktionsdaten, die eine Aktion des Charakters repräsentieren, einschließen;
eine Aktualisiereinheit (3111), die, bei Empfang, vom Kommunikationsendgerät über die Kommunikationseinheit, einer Aktualisierungsanfrage, die den Identifikator, die Positionsdaten und die Aktionsdaten einschließt, die globalen Steuerdaten des virtuellen Raumes, die in der Speichereinheit gespeichert sind, basierend auf der Aktualisierungsanfrage aktualisiert;
eine erste Übertragungssteuereinheit (3112), die einen Identifikator, Positionsdaten und Aktionsdaten eines weiteren Charakters, der innerhalb eines vorbestimmten Bereichs in Bezug auf eine Position positioniert ist, die durch die Positionsdaten repräsentiert ist, die in der Aktualisierungsanfrage eingeschlossen sind, aus den Steuerdaten des virtuellen Raumes extrahiert, die in der Speichereinheit in Verbindung mit einer neuesten Aktualisierungszeit gespeichert sind, und die extrahierten Informationen an das Kommunikationsendgerät über die Kommunikationseinheit überträgt; **gekennzeichnet durch**
eine zweite Übertragungssteuereinheit (3113), die, bei Empfang, vom Kommunikationsendgerät über die Kommunikationseinheit, einer Historienwiedergabeanfrage, die den Identifikator, Positionsdaten in Bezug auf die die Wiedergabe der Historie durchzuführen ist und eine Wiedergabestartzeit der Steuerdaten des virtuellen Raumes einschließt, einen Identifikator, Positionsdaten und Aktionsdaten eines weiteren Charakters, der innerhalb eines vorbestimmten Bereichs in Bezug auf eine Position positioniert ist, die durch die Positionsdaten repräsentiert ist, die in der Historienwiedergabeanfrage eingeschlossen sind, aus den Steuerdaten des virtuellen Raumes extrahiert, die in der Speichereinheit in Verbindung mit der Wiedergabestartzeit gespeichert sind, und die extrahierten Informationen an das Kommunikationsendgerät über die Kommunikationseinheit überträgt,
wobei, bei Empfang, vom Kommunikationsendgerät über die Kommunikationseinheit, einer Historienänderungsanfrage, die den Identifikator, die Positionsdaten, die Aktionsdaten und eine Wiedergabezeit der Steuerdaten des virtuellen Raumes einschließt, die Aktualisiereinheit die Steuerdaten des virtuellen Raumes aktualisiert, die in der Speichereinheit in Verbindung mit einer Aktualisierungszeit gespeichert sind, die der Wiedergabezeit in Übereinstimmung mit einem Inhalt entspricht, der in der Historienänderungsanfrage eingeschlossen ist.

2. Vorrichtung nach Anspruch 1, wobei die Aktionsdaten Daten sind, die einen Inhalt einer Äußerung, die über das Kommunikationsendgerät gemacht wird, einschließen.

3. Programm zum Bewirken, dass ein Computer folgende Schritte ausführt:
Speichern von Steuerdaten eines virtuellen Raumes in Verbindung mit einer oder mehreren Aktualisierungszeiten der Steuerdaten des virtuellen Raumes, wobei die Steuerdaten des virtuellen Raumes einen Identifikator, der einen Charakter identifiziert, Positionsdaten, die eine Position des Charakters in einem virtuellen Raum repräsentieren, und Aktionsdaten, die eine Aktion des Charakters repräsentieren, einschließen;
bei Empfang, vom Kommunikationsendgerät, einer Aktualisierungsanfrage, die den Identifikator, die Positionsdaten und die Aktionsdaten einschließt, Aktualisieren der gespeicherten globalen Steuerdaten des virtuellen Raumes basierend auf der Aktualisierungsanfrage;
Extrahieren von einem Identifikator, Positionsdaten und Aktionsdaten eines weiteren Charakters, der innerhalb eines vorbestimmten Bereichs in Bezug auf eine Position positioniert ist, die durch die Positionsdaten repräsentiert ist, die in der Aktualisierungsanfrage eingeschlossen sind, aus den Steuerdaten des virtuellen Raumes, die in Verbindung mit einer neuesten Aktualisierungszeit gespeichert sind, und Übertragen der extrahierten Informationen an das Kommunikationsendgerät; **gekennzeichnet durch**
bei Empfang, vom Kommunikationsendgerät, einer Historienwiedergabeanfrage, die den Identifikator, Positionsdaten in Bezug auf die die Wiedergabe der Historie durchzuführen ist und eine Wiedergabestartzeit der Steuerdaten des virtuellen Raumes einschließt, Extrahieren von einem Identifikator, Positionsdaten und Aktionsdaten eines weiteren Charakters, der innerhalb eines vorbestimmten Bereichs in Bezug auf eine Position positioniert ist, die durch die Positionsdaten repräsentiert ist, die in der Historienwiedergabeanfrage eingeschlossen sind, aus den Steuerdaten des virtuellen Raumes, die in Verbindung mit der Wiedergabestartzeit gespeichert sind, und Übertragen der extrahierten Informationen an das Kommunikationsendgerät, und
bei Empfang, vom Kommunikationsendgerät, einer Historienänderungsanfrage, die den Identifikator, die Positionsdaten, die Aktionsdaten und eine Wiedergabezeit der Steuerdaten des virtuellen Raumes einschließt, Aktualisieren der Steuerdaten des virtuellen Raumes mit einer Aktualisierungszeit, die der Wiedergabezeit in Übereinstimmung mit einem Inhalt entspricht, der in der Historienänderungsanfrage eingeschlossen ist.

4. System zur Bereitstellung von Kommunikation in einem virtuellen Raum, umfassend eine Servervorrichtung und ein Kommunikationsendgerät,
wobei die Servervorrichtung (30) einschließt:
eine erste Kommunikationseinheit (32), die mit dem Kommunikationsendgerät (11) kommuniziert;
eine Speichereinheit (33), die Steuerdaten eines virtuellen Raumes in Verbindung mit einer oder mehreren Aktualisierungszeiten der Steuerdaten des virtuellen Raumes speichert, wobei die Steuerdaten des virtuellen Raumes einen Identifikator, der einen Charakter identifiziert, Positionsdaten, die eine Position des Charakters in einem virtuellen Raum repräsentieren, und Aktionsdaten, die eine Aktion des Charakters repräsentieren, einschließen;
eine Aktualisiereinheit (3111), die, bei Empfang, vom Kommunikationsendgerät über die erste Kommunikationseinheit, einer Aktualisierungsanfrage, die den Identifikator, die Positionsdaten und die Aktionsdaten einschließt, die gespeicherten globalen Steuerdaten des virtuellen Raumes in der Speichereinheit basierend auf der Aktualisierungsanfrage aktualisiert;
eine erste Übertragungssteuereinheit (3112), die einen Identifikator, Positionsdaten und Aktionsdaten eines weiteren Charakters, der innerhalb eines vorbestimmten Bereichs in Bezug auf eine Position positioniert ist, die durch die Positionsdaten repräsentiert ist, die in der Aktualisierungsanfrage eingeschlossen sind, aus den Steuerdaten des virtuellen Raumes extrahiert, die in der Speichereinheit in Verbindung mit einer neuesten Aktualisierungszeit gespeichert sind, und die extrahierten Informationen an das Kommunikationsendgerät über die erste Kommunikationseinheit überträgt; wobei die Servervorrichtung **gekennzeichnet ist durch**
eine zweite Übertragungssteuereinheit (3113), die, bei Empfang, vom Kommunikationsendgerät über die erste Kommunikationseinheit, einer Historienwiedergabeanfrage, die den Identifikator, Positionsdaten in Bezug auf die die Wiedergabe der Historie durchzuführen ist und eine Wiedergabestartzeit der Steuerdaten des virtuellen Raumes einschließt, einen Identifikator, Positionsdaten und Aktionsdaten eines weiteren Charakters, der innerhalb eines vorbestimmten Bereichs in Bezug auf eine Position positioniert ist, die durch die Positionsdaten repräsentiert ist, die in der Historienwiedergabeanfrage eingeschlossen sind, aus den Steuerdaten des virtuellen Raumes extrahiert, die in der Speichereinheit in Verbindung mit der Wiedergabestartzeit gespeichert sind, und die extrahierten Informationen an das Kommunikationsendgerät über die erste Kommunikationseinheit überträgt,
wobei, bei Empfang, vom Kommunikationsendgerät über die Kommunikationseinheit, einer Historienänderungsanfrage, die den Identifikator, die Positionsdaten, die Aktionsdaten und eine Wiedergabezeit der Steuerdaten des virtuellen Raumes einschließt, die Aktualisiereinheit die Steuerdaten des virtuellen Raumes aktualisiert, die in der Speichereinheit in Verbindung mit einer Aktualisierungszeit gespeichert sind, die der Wiedergabezeit in Übereinstimmung mit einem Inhalt entspricht, der in der Historienänderungsanfrage eingeschlossen ist, und
wobei das Kommunikationsendgerät (11) einschließt:
eine zweite Kommunikationseinheit, die mit der den virtuellen Raum bereitstellenden Vorrichtung kommuniziert;
eine Anzeigeeinheit (14);
eine Eingabeeinheit (13) zum Eingeben einer Aktion, die vom Charakter in dem virtuellen Raum auszuführen ist;
eine erste Steuereinheit (1111), die eine Aktualisierungsanfrage, die den Identifikator, die Positionsdaten und Aktionsdaten, die eine Aktion repräsentieren, die über die Eingabeeinheit an die den virtuellen Raum bereitstellende Vorrichtung eingegeben wird, einschließt, über die zweite Kommunikationseinheit überträgt; und
eine zweite Steuereinheit (1112), die, wenn die zweite Kommunikationseinheit Steuerdaten eines virtuellen Raumes empfängt, die von der ersten Übertragungssteuereinheit oder der zweiten Übertragungssteuereinheit der den virtuellen Raum bereitstellenden Vorrichtung übertragen wurden, bewirkt, dass die Anzeigeeinheit ein Bild des virtuellen Raumes basierend auf den Steuerdaten des virtuellen Raumes anzeigt.

## Revendications

1. Dispositif pour fournir des communications dans un espace virtuel comprenant :
une unité de communication (32) qui communique avec un terminal de communication (10) ;
une unité de stockage (33) qui stocke des données de commande de l'espace virtuel en association avec une ou plusieurs heures de mise à jour des données de commande d'espace virtuel, les données de commande d'espace virtuel comprenant un identifiant qui identifie un personnage, des données de position qui représentent une position du personnage dans un espace virtuel et des données d'action qui représentent une action du personnage ;
une unité de mise à jour (3111) qui, lors de la réception d'une demande de mise à jour comprenant l'identifiant, les données de position et les données d'action du terminal de communication via l'unité de communication, met à jour les données de commande d'espace virtuel globales stockées dans l'unité de stockage sur la base de la demande de mise à jour ;
une première unité de commande de transmission (3112) qui extrait un identifiant, des données de position et des données d'action d'un autre personnage qui est positionné dans une plage prédéterminée par rapport à une position représentée par les données de position incluses dans la demande de mise à jour, des données de commande d'espace virtuel stockées dans l'unité de stockage en association avec la dernière heure de mise à jour et transmet les informations extraites au terminal de communication via l'unité de communication ; **caractérisé par**
une seconde unité de commande de transmission (3113) qui, lors de la réception d'une demande de reproduction d'historique comprenant l'identifiant, les données de position par rapport auxquelles la reproduction de l'historique doit être effectuée et l'heure de départ de la reproduction des données de commande d'espace virtuel du terminal de communication via l'unité de communication, extrait un identifiant, des données de position et des données d'action d'un autre personnage qui est positionné dans une plage prédéterminée par rapport à une position représentée par les données de position incluses dans la demande de reproduction d'historique, des données de commande d'espace virtuel stockées dans l'unité de stockage en association avec l'heure de départ de la reproduction, et transmet les informations extraites au terminal de communication via l'unité de communication,
dans lequel, lors de la réception d'une demande de modification d'historique comprenant l'identifiant, des données de position, des données d'action et l'heure de reproduction des données de commande d'espace virtuel à partir du terminal de communication via l'unité de communication, l'unité de mise à jour met à jour les données de commande d'espace virtuel stockées dans l'unité de stockage en association avec une heure de mise à jour correspondant à l'heure de reproduction conformément à un contenu inclus dans la demande de modification d'historique.

2. Dispositif selon la revendication 1, dans lequel les données d'action sont des données comprenant un contenu d'une déclaration effectuée via le terminal de communication.

3. Programme pour amener un ordinateur à effectuer les étapes consistant à :
stocker des données de commande d'espace virtuel en association avec une ou plusieurs heures de mise à jour des données de commande d'espace virtuel, les données de commande d'espace virtuel comprenant un identifiant qui identifie un personnage, des données de position qui représentent une position du personnage dans un espace virtuel et des données d'action qui représentent une action du personnage ;
lors de la réception d'une demande de mise à jour comprenant l'identifiant, les données de position et les données d'action venant du terminal de communication, mettre à jour les données de commande d'espace virtuel globales stockées sur la base de la demande de mise à jour ;
extraire un identifiant, des données de position et des données d'action d'un autre personnage qui est positionné dans une plage prédéterminée par rapport à une position représentée par les données de position incluses dans la demande de mise à jour, des données de commande d'espace virtuel stockées en association avec la dernière heure de mise à jour et transmettre les informations extraites au terminal de communication, **caractérisé par**,
lors de la réception d'une demande de reproduction d'historique comprenant l'identifiant, les données de position par rapport auxquelles la reproduction de l'historique doit être effectuée et l'heure de départ de reproduction des données de commande d'espace virtuel à partir du terminal de communication, extraire un identifiant, des données de position et des données d'action d'un autre personnage qui est positionné dans une plage prédéterminée par rapport à une position représentée par les données de position incluses dans la demande de reproduction d'historique, des données de commande d'espace virtuel stockées en association avec l'heure de départ de reproduction, et transmettre les informations extraites au terminal de communication et,
lors de la réception d'une demande de modification d'historique comprenant l'identifiant, les données de position, les données d'action et l'heure de reproduction des données de commande d'espace virtuel par le terminal de communication, mettre à jour les données de commande d'espace virtuel avec une heure de mise à jour correspondant à l'heure de reproduction conformément à un contenu inclus dans la demande de modification d'historique.

4. Système pour fournir des communications dans un espace virtuel comprenant un dispositif serveur et un terminal de communication,
le dispositif serveur (30) comprenant :
une première unité de communication (32) qui communique avec le terminal de communication (11) ;
une unité de stockage (33) qui stocke des données de commande d'espace virtuel en association avec une ou plusieurs heures de mise à jour des données de commande d'espace virtuel, les données de commande d'espace virtuel comprenant un identifiant qui identifie un personnage, des données de position qui représentent une position du personnage dans un espace virtuel et des données d'action qui représentent une action du personnage ;
une unité de mise à jour (3111) qui, lors de la réception d'une demande de mise à jour comprenant l'identifiant, les données de position et les données d'action depuis le terminal de communication via la première unité de communication, met à jour les données de commande d'espace virtuel globales stockées dans l'unité de stockage sur la base de la demande de mise à jour ;
une première unité de commande de transmission (3112) qui extrait un identifiant, des données de position et des données d'action d'un autre personnage qui est positionné dans une plage prédéterminée par rapport à une position représentée par les données de position incluses dans la demande de mise à jour, des données de commande d'espace virtuel stockées dans l'unité de stockage en association avec une heure de mise à jour la plus tardive et transmet les informations extraites au terminal de communication via la première unité de communication ; le dispositif serveur étant **caractérisé par** :
une seconde unité de commande de transmission (3113) qui, lors de la réception d'une demande de reproduction d'historique comprenant l'identifiant, les données de position par rapport auxquelles la reproduction d'historique doit être effectuée et l'heure de départ de reproduction des données de commande d'espace virtuel par le terminal de communication via la première unité de communication, extrait un identifiant, des données de position et des données d'action d'un autre personnage qui est positionné dans une plage prédéterminée par rapport à une position représentée par les données de position incluses dans la demande de reproduction d'historique, des données de commande d'espace virtuel stockées dans l'unité de stockage en association avec le temps de départ de reproduction, et transmet les informations extraites au terminal de communication via la première unité de communication,
dans lequel, lors de la réception d'une demande de modification d'historique comprenant l'identifiant, les données de position, les données d'action et l'heure de reproduction des données de commande d'espace virtuel par le terminal de communication via l'unité de communication, l'unité de mise à jour met à jour les données de commande d'espace virtuel stockées dans l'unité de stockage en association avec une heure de mise à jour correspondant à l'heure de reproduction conformément à un contenu inclus dans la demande de modification d'historique, et
le terminal de communication (11) comprenant :
une seconde unité de communication qui communique avec le dispositif fournissant l'espace virtuel ;
une unité d'affichage (14) ;
une unité d'entrée (13) pour saisir une action à effectuer par le personnage dans l'espace virtuel ;
une première unité de commande (1111) qui transmet une demande de mise à jour comprenant l'identifiant, les données de position et les données d'action représentant une entrée d'action via l'unité d'entrée dans le dispositif fournisseur d'espace virtuel via la seconde unité de communication ; et
une seconde unité de commande (1112) qui, lorsque la seconde unité de communication reçoit des données de commande d'espace virtuel transmises par la première unité de commande de transmission ou la seconde unité de commande de transmission du dispositif fournisseur d'espace virtuel, amène l'unité d'affichage à afficher une image de l'espace virtuel basée sur les données de commande d'espace virtuel.
